Europäisches Patentamt

European Patent Office

Office européen des brevets

(19)

(11) Publication number: **0 021 288**
**B1**

(12) **EUROPEAN PATENT SPECIFICATION**

(45) Date of publication of patent specification: 23.11.83

(51) Int. Cl.³: **H 02 H 7/26,** G 06 F 13/00, G 06 F 11/00

(21) Application number: **80103321.8**

(22) Date of filing: **13.06.80**

(54) Setting device for protective control system.

(30) Priority: **15.06.79 JP 75375/79**

(43) Date of publication of application:
**07.01.81 Bulletin 81/1**

(45) Publication of the grant of the patent:
**23.11.83 Bulletin 83/47**

(84) Designated Contracting States:
**CH DE GB LI SE**

(56) References cited:
**WO - A - 80/00383**
**FR - A - 2 152 564**
**US - A - 3 544 777**

**LANDIS & GYR MITTEILUNGEN, Nr. 11/12,
1971, Zug, CH E. LUTZ: "Einführung in die
Computer Technik", pages 1-33
IEEE TRANSACTIONS ON POWER APPARATUS
& SYSTEMS, vol. PAS-96, March/April 1977,
New York, USA MIKI, SANO & MAKINO: "Study
of high-speed distance relay using
microcomputer", pages 602-610**

(73) Proprietor: **TOKYO SHIBAURA DENKI KABUSHIKI
KAISHA
72, Horikawa-cho Saiwai-ku
Kawasaki-shi Kanagawa-ken 210 (JP)**

(72) Inventor: **Yamaura, Mitsuru
2-13-4, Mejirodai
Hachioji-shi Tokyo (JP)**
Inventor: **Kondow, Ryotaro
1-11-4, Miyasaka Setagaya-ku
Tokyo (JP)**
Inventor: **Inagaki, Junichi
2-13, Miya-machi
Fuchu-shi Tokyo (JP)**
Inventor: **Matsuzawa, Kunio
5-12-5, Hashimoto
Sagamihara-shi Kanagawa-ken (JP)**

(74) Representative: **Blumbach Weser Bergen Kramer
Zwirner Hoffmann Patentanwälte
Radeckestrasse 43
D-8000 München 60 (DE)**

Courier Press, Leamington Spa, England.

Setting device for protective control system

This invention relates to a setting apparatus for a protective control system comprising a digital setting value data generator and a digital processor including a program memory, a data memory and a processing unit for carrying out predetermined protective operations by using a setting value data generated from the digital setting value data generator and stored in a non-volatile memory.

In the prior-art protective control system, for instance a protective relay system used for a power transmission system, setting taps, rotary switches and variable resistors are provided for respective relay elements such as distance relay elements, overvoltage relay elements and overcurrent relay elements so that the setting of a value for each element can be independently made. For example, in a distance protective relay system for protecting a power transmission line, overcurrent relays, undervoltage relays, mho relays, reactance relays, earthing overvoltage relays, directional relays, etc. are used in combination. In such protective relay system, there are sometimes several tens of setting values that are to be set for respective relay elements included in the system. Besides, the individual setting values vary with the system, in which the protective system is employed, and therefore the setting operation requires calculations of the setting values done by a highly skilled engineer.

Meanwhile, in the light of the recent progress of the digital data processing techniques it has been proposed to incorporate digital arithmetic processing units such as microcomputers in such protective control systems. A great advantage of such digital protective control system is that, unlike the prior-art system constructed by combining a number of protective relay element circuits, it can be reduced in size by arranging such that the processing for a number of elements is effected with the same hardware after a combination of programs stored in the digital arithmetic processing unit.

However, if a number of setting sections for respective relay elements are provided in such a digital protective control system, it is undesired from the standpoint of the size reduction. Accordingly, it has been contemplated to permit a plurality of setting values to be written from a single setting section to a memory within a digital processing unit and selectively read out when required. Such setting systems are roughly classed into two types depending upon the kind of the memory used.

One type of system is distinguished from the other by the use of the random access memory (RAM), a memory capable of reading and writing data at any time. A drawback in this system lies in that the data memorized in the RAM is lost when a power source connected thereto is lost. In other words, when the power source is lost due to power stoppage or removal of the power source at the time of the maintenance of the system, it is necessary to make the setting of a plurality of values, which is very cumbersome and impractical.

The other type of system uses the read only memory (ROM). As the ROM, commonly termed IC memories are used in case where such memories are assembled in microcomputers or the like in order to meet the requirements for miniaturization. With the ROM, data once written in it will not be lost even when the power source is lost. However, for writing the data in it an exclusive writing unit which is so called as an ROM writer is necessary, and the data once written cannot be easily changed, which is very inconvenient in view of the maintenance and application of the system.

"IEEE Transactions on power Apparatus and Systems" Vol. PAS—96, March-April 1977 discloses a microcomputer for protective relay using a non-volatile memory comprising a ROM containing program instructions. A RAM is used for storing data. If there is a power interruption, the contents of the RAM may be lost. A relay setting circuit is used for setting a value which is the basis for the protective operation carried out by the CPU of the system. This system has the drawback that the setting apparatus is not always capable of effecting protective control regardless of a setting operation period. In the known system the normal operation of the protective control system has to be stopped at the time when it is desired to change a setting value. When a new setting value is to be set in the known system, there is no protection of the power transmission system which is to be protected.

An object of the invention, accordingly, is to provide a setting device for a protective control system, with which the setting and alteration of setting values can be readily made and also the setting value once memorized is not lost even when the power source is lost, and the regular protective control function of which is maintained even during the operation of changing a setting value.

According to the invention, the above object is achieved by a setting apparatus for a protective control system which is characterized in that the digital setting value data generator comprises a setting device for generating a digital setting value data, a first non-volatile memory capable of both reading and writing for storing the digital setting value data, a second non-volatile memory capable of both reading and writing for storing the digital setting value data read out from the first non-volatile memory, and means for reading out the data stored in the second memory as a setting value data during a setting operation period wherein the contents of the first memory are renewed with a new setting value data generated from the setting device and for reading out the data stored in the first or second memory as a setting value data during a non-setting period other than the setting operation period.

This invention can be more fully understood from the following detailed description when taken in conjunction with the accompanying drawings, in which:

Figure 1 is a block diagram showing the setting device for a protective control system according to the invention applied to a protective relay system for a power transmission system;

Figure 2 is a block diagram showing an embodiment of the setting device for a protective control system shown in Figure 1;

Figure 3 is a block diagram showing the construction of the second switch shown in Figure 2;

Figure 4 is a time chart illustrating the operation of the circuit of Figures 2 and 3;

Figure 5 is a block diagram showing an example of the address control circuit in the embodiment of Figure 2;

Figure 6 is a time chart illustrating the operation of the embodiment shown in Figure 2;

Figure 7 is a block diagram showing a different embodiment of the invention;

Figure 8 is a block diagram showing a further embodiment of the invention;

Figure 9 is a block diagram showing the address control circuit in the embodiment of Figure 8;

Figure 10 is a time chart illustrating the operation of the embodiment of Figure 8;

Figure 11 is a block diagram showing a still further embodiment of the invention;

Figure 12 is a block diagram showing an example of the address control circuit in the embodiment of Figure 11; and

Figure 13 is a time chart illustrating the operation of the circuit of Figure 12.

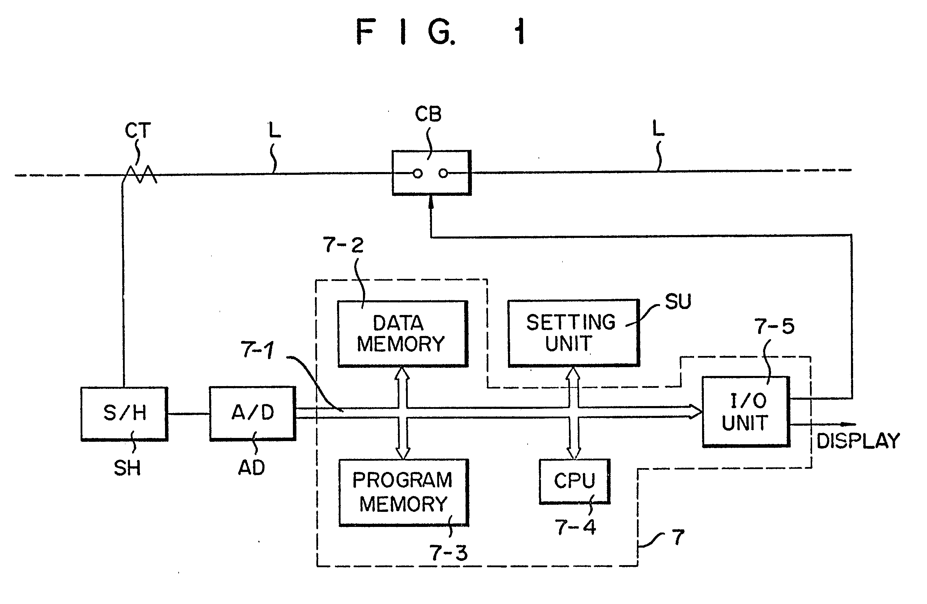

Figure 1 is a block diagram outlining the setting device for a protective control system according to the invention applied to a protective relay system for a power transmission system. Before describing the preferred embodiments of the invention, the construction and operation of the protective relay system will be described with reference to Figure 1. In Figure 1, designated at L is a power transmission line, in which a current transformer CT and a circuit breaker CB are inserted. An output terminal of the current transformer CT is connected to the input terminal of a sample/hold circuit SH. A detection signal representing the condition of the current in or voltage on the line L, detected by the current transformer CT, is sampled by the sample/hold circuit SH. The output terminal of the sample/hold circuit SH is connected to the input terminal of a next-stage analog-to-digital (A/D) converter AD. The sampled detection signal, which is an analog signal, is converted by the A/D converter AD into a corresponding digital signal. The digital signal obtained in this way is supplied from the A/D converter AD through a data bus 7-1 in a digital operational processor 7 to a data memory 7-2 therein and memorized in the data memory 7-2. The digital operational processor unit 7 also includes a program memory 7-3, a central processing unit (CPU) 7-4 and an input/output (I/O) unit 7-5. The setting unit SU according to the invention is also coupled to the data bus 7-1. A protective control output of the digital operational processor 7 is obtained from the I/O unit 7-5. It is supplied to a display unit for display thereon, and is also supplied as a trip command to a tripping terminal of the circuit breaker CB.

In case when the system shown in Figure 1 is used as, for instance, overcurrent protection relay, predetermined calculations are made with data stored in the data memory 7-2, representing the value of current flowing through the line L, according to a program stored in the program memory 7-3, and the result of the calculations is compared with a value set by the setting device SU. If the result of the calculations is greater than the set value, the processor determines that there is overcurrent in the line L, and a trip command is delivered from the I/O unit 7-5 to the circuit breaker CB to open it. In the setting unit SU, a plurality of values for various relay elements are previously set, and these setting values are successively read out according to a program stored in the program memory 7-3 for operational processing.

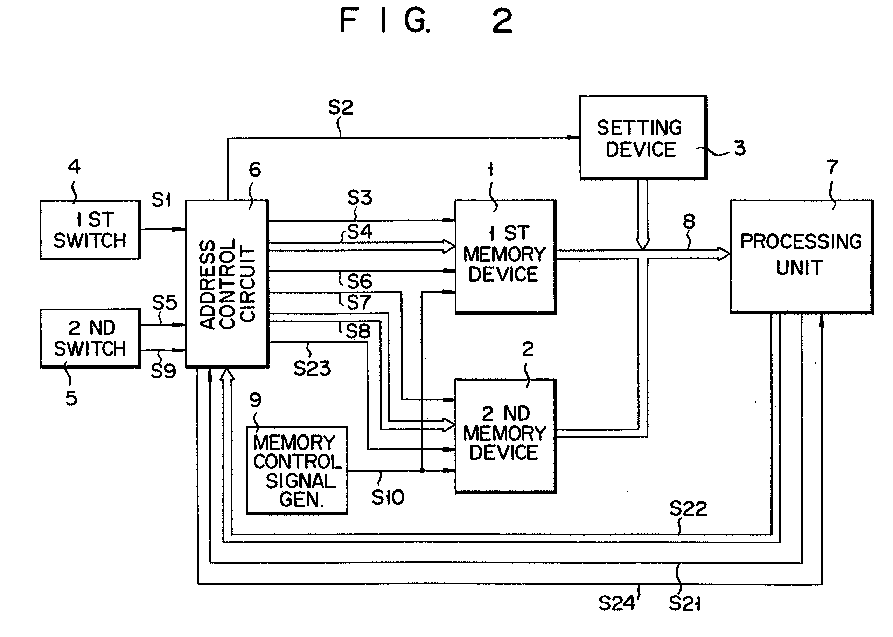

An embodiment of the setting unit according to the invention will now be described with reference to Figure 2. The setting unit SU shown in Figure 1 corresponds to the circuit of Figure 2 exclusive of the processing section 7. In Figure 2, designated at 1 is a first memory capable of both writing and reading, and it is a non-volatile memory, that is, it will not lose its retained data even when power supply to it is cut due to such a cause as power stoppage. Designated at 2 is a second memory which has the same character as the first memory 1 and is provided in parallel with the first memory 1. As the generally available memory that has this character, there are core memories and semiconductor memories. In this embodiment, a semiconductor memory, for instance non-volatile RAM, utilizing an MNOS (metal-nitride-oxide semiconductor) is used. In this memory, each memory cell comprises an ordinary volatile MOS (metal-oxide semiconductor) flip-flop and a pair of MNOS FETs for memorizing non-volatile information. These MNOS FETs can preserve the memorized information even when their control power supply is lost. This means that the data memorized before the loss of the control power supply can be reproduced by transferring data memorized in the MNOS FETs back to the MOS flip-flop after the recovery of the power supply. Designated at 3 is a setting section for setting data in the memory section 1, at 4 a first switch for producing a write signal $S_1$ for writing the setting value data from the setting section 3 in a predetermined address in the first memory 1, and at 5 a second switch for producing a transfer signal $S_5$ for transferring the memorized data from the first memory 1 to the second memory 2 and a setting period indication signal $S_9$ indicating the setting period. A thumb-wheel switch or a rotary switch delivering a BCD signal may be used as the setting section 3. Designated at 6 is an address control circuit, to which the write signal $S_1$ produced from the first switch 4 with the operation thereof, the transfer signal produced from the second switch 5 with the operation thereof and the setting period indication signal $S_9$ are coupled. When the address control circuit 6 receives the write signal $S_1$, its control action is caused such that it produces a permit signal $S_2$ for producing the setting value data in the setting section 3, a first write signal $S_3$ for writing input data in the first memory 1 and a first address signal $S_4$ for specifying an address in which to write the input data coupled to the first memory 1. The first address signal $S_1$ varies with the element, for which a certain value is to be set, and it is set in the address control circuit 6. When the address control circuit 6 receives the transfer signal $S_5$ produced from the second switch 5, it produces a first read signal $S_6$ and the first address signal $S_4$ for reading out the memorized data from the first memory 1 and also a second write signal $S_7$ and a second address signal $S_8$ for writing the memorized data output from the first memory 1 in the second memory 2. In this case, the first and second address signals $S_4$ and $S_8$ during the transfer are progressively changed when the transfer signal $S_5$ is once received for transferring all the data memorized in the first memory 1. The processing section 7 carries out operations for the protective control when the memorized data is read out from the second memory 2 by using a data bus 8. When the data bus 8 is not used, the processing section 7 gives a request signal $S_{21}$ and a third address signal $S_{22}$ for reading out the memorized data from the second memory 2. This processing section 7 is usually constituted by a digital arithmetic unit such as a microcomputer having a construction as shown in Figure 1. As the function of the address control circuit 6 when the request signal $S_{21}$ is supplied to it, in case when the reading from the second memory is permitted it produces the second address signal $S_8$ and second read signal $S_{23}$ to let the memorized data in the second memory 2 to be coupled therefrom through the data bus 8 to the processing section 7. In case when the reading of the memory 2 is not permitted, it gives a wait signal $S_{24}$ to the processing section 7. Designated at 9 is a non-volatile character control section which supplies a non-volatile character control signal $S_{10}$ to both the memories 1 and 2 for controlling the non-volatile character thereof.

The first and second memories 1 and 2, setting section 3 and processing section 7 are connected to the data bus 8.

Figure 3 shows a specific example of the second switch 5. In this switch, a switch element 100 produces, when it is turned on, a switch output $S_{100}$ of a level "1" coupled to a setting period circuit 101 and also to a one-shot circuit 102. The setting period circuit 101 produces the afore-mentioned setting period indication signal $S_9$ after the lapse of a period $T_1$ from the instant when it receives the switch output $S_{100}$. The first one-shot circuit 102 receives the switch output $S_{100}$ and produces the transfer signal $S_5$, which is a one-shot pulse having a duration $T_2$, by detecting the falling of the switch output $S_{100}$ caused when the switch element 100 is turned off. The duration $T_2$ of the one-shot pulse is set to be longer than the delay period $T_1$ provided by setting period circuit 101.

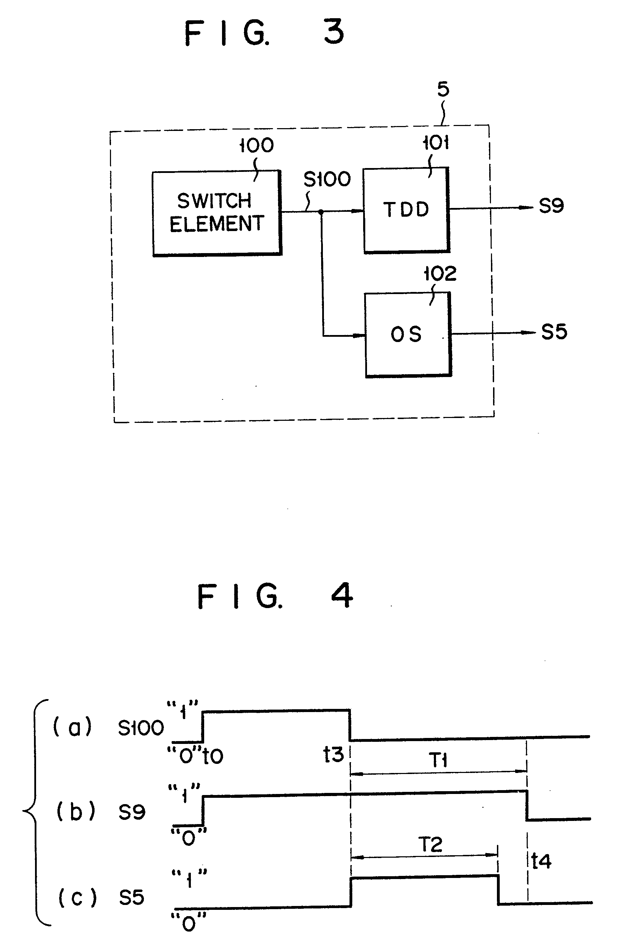

The time chart of Figure 4 illustrates the signals involved in the construction of Figure 3. In Figure 4, labeled (a) is the switch output $S_{100}$, (b) the setting period indication signal $S_9$, and (c) the transfer signal $S_5$. As shown in (a), the switch element 100 is turned on at an instant $t_0$ and turned off at an instant $t_3$. The setting period indication signal $S_9$, as shown in (b), is at level "1" from the instant $t_0$ till the end of the period $T_1$ after the instant $t_3$, i.e., till an instant $t_4$. The transfer signal $S_5$, as shown in (c), is at level "1" from the instant $t_3$ till the instant $t_4$.

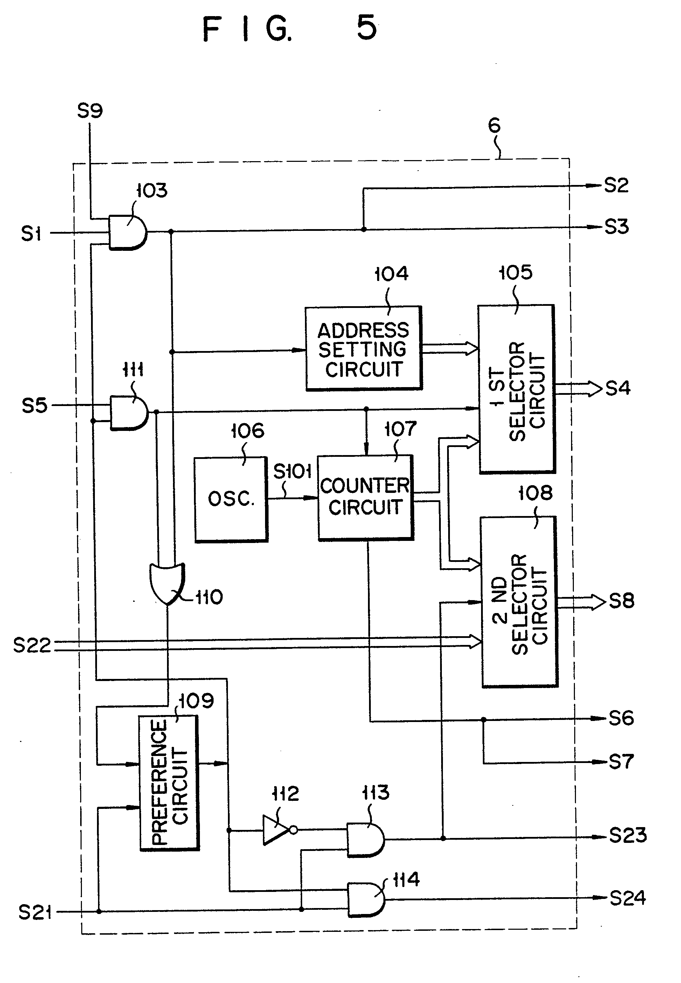

The address control circuit 6 in the system of Figure 2 will now be described in detail with reference to Figure 5.

Figure 5 is a block diagram showing a specific example of the address control circuit 6. In Figure 5, an AND circuit 103 receives and takes the AND of the aforementioned setting period indication signal $S_9$ and write signal $S_1$ and the output of a preference circuit 109 and, when the input condition is satisfied, supplies the permit signal $S_2$ and first write signal $S_3$ to the setting section 3. The preference circuit 109 discriminates whether or not the use of the data bus 8 is permitted. When there is a request for the use of the bus from the processing section 7 or setting section 3 while the bus is being used by either one of these sections, the preference circuit 109 lets the requesting side to wait until the preceding processing on the other side is completed. When the setting operation is preceding, the circuit 109 produces an output "1". At this time, if the second switch 5 is "on" and producing the setting operation indication signal $S_9$ and also the use of the data bus $S_8$ is permitted, the write signal $S_1$ is provided as the permit signal $S_2$ and second write signal $S_3$. The output of the AND circuit 103 is also coupled to an address setting circuit 104 and an OR circuit 110. The address setting circuit 104 sets different addresses with different elements usually by means of a rotary switch. When the output of the AND circuit 103 is supplied, the address setting circuit 104 supplies an address output to a first selector circuit 105. The first selector circuit 105 switches the first address signal $S_4$ at the time of the writing and at the time of the transfer. At the time of the writing, the output of the address setting circuit 104 is provided as the first address signal $S_4$. A second AND circuit 111 takes the AND of the transfer signal $S_5$ and the output of the preference circuit and, when the use of the data bus 8 is permitted, supplies a transfer permit signal to a counter circuit 107, the first selector circuit 105 and an OR circuit 110. A clock signal $S_{101}$ produced from an oscillator circuit 106 is coupled to the counter circuit 107. When the counter circuit 107 receives the output of the AND circuit 111, it starts to count clock pulses of the clock signal, and its count value is coupled to the first selector circuit 105 and also to a second selector circuit 108. This count value constitutes the first and second address signals $S_4$ and $S_8$ at the time of the transfer, and the counter circuit 107 is reset when the count thereof reaches an address value required for the transfer. The counter circuit 107 also provides the clock signal $S_{101}$ as the first read signal $S_6$ and second write signal $S_7$ while it is counting this clock signal. Thus, when the transfer signal $S_5$ is produced and the use of the data bus 8 is permitted, the first selector circuit 105 is switched such that the output of the counter circuit 107 is coupled to it, that is, the output of the counter circuit 107 is provided as the first address signal $S_4$. The output of the counter circuit 107 is also provided as the second address signal $S_8$ through the second selector circuit 108. While the second selector circuit 108 normally provides the output of the counter circuit 107 as the second address signal $S_8$, when the processing section 7 reads out the data from the second memory 2 it is switched such that the third address signal $S_{22}$ is provided as the second address signal $S_8$ through it. The request signal $S_{21}$ from the processing section 7 is coupled to the preference circuit 109, an AND circuit 113 which takes the AND of the signal $S_{21}$ and an inversion signal from a NOT circuit 112 inverting the output of the preference circuit 109 and an AND circuit 114 which takes the AND of the signal $S_{21}$ and the output of the preference circuit 109. The preference circuit 109 receives the output of the first OR circuit 110 and the request signal $S_{21}$ and produces output in the afore-mentioned action. Thus, when the request signal $S_{21}$ is supplied during the use of the data bus 8 in the setting operation, the AND circuit 114 provides the wait signal $S_{24}$ for letting the processing section 7 wait until the use of the data bus 8 in the setting operation is ended, while the input AND condition of the AND circuit 113 is not satisfied so that the AND circuit 113 provides no output. When the request signal $S_{21}$ is supplied in a state of the data bus 8 not used in the setting operation, the output of the preference circuit 109 becomes "0". At this time, no output is provided from the first and second AND circuits 103 and 111 so that the setting operation is postponed until the use of the data bus 8 by the processing section 7 is ended. The duration of the write signal $S_1$ and transfer signal $S_5$ is set to be sufficiently long compared to the duration of the request signal $S_{21}$. When the output of the preference circuit 109 is "0", the AND circuit 114 does not provide the wait signal $S_{24}$, and the output of the AND circuit 113 coupled to the NOT circuit 112 is "1", so that the request signal $S_{21}$ is provided as the second read signal $S_{23}$ and the switching signal to the second selector circuit 108. Thus, the output of the third address signal $S_{22}$ is provided as the second address signal $S_8$ to permit reading from the second memory 2 by the processing section 7. When this reading is ended, the request signal $S_{21}$ disappears, so that the output of the preference circuit 109 becomes "1".

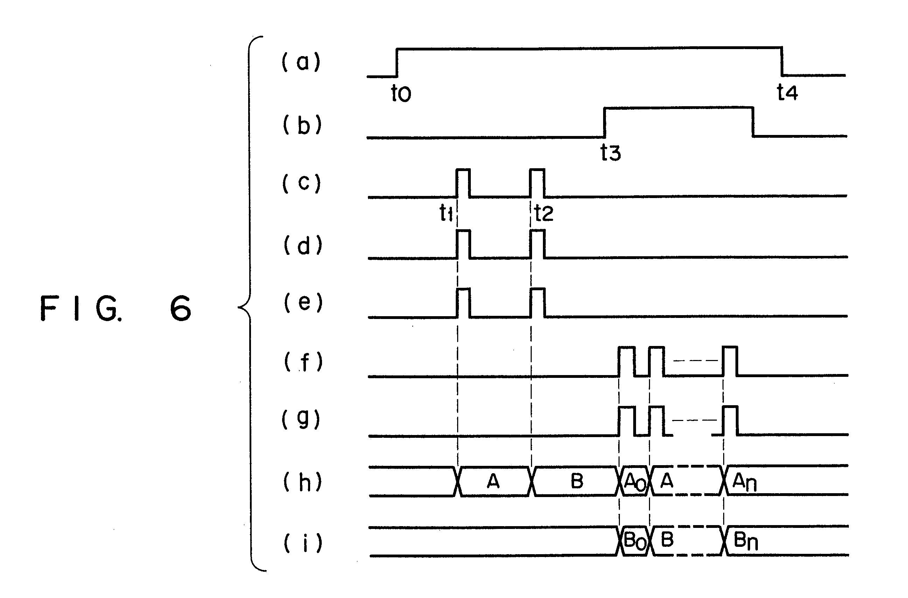

The operation of the setting unit in the protective control system of the above construction will now be described with reference to the time chart of Figure 6. In Figure 6, labeled (a) is the setting operation indication signal $S_9$, (b) the transfer signal $S_5$, (c) the write signal $S_1$, (d) the permit signal $S_2$, (e) the first write signal $S_3$, (f) the second write signal $S_7$, (g) the first read signal $S_6$, (h) the first address signal $S_4$, and (i) the second address signal $S_8$.

The setting operation is started by turning "on" the second switch 5 (shown in Figures 3 and 4). When the switch 5 is turned "on" at an instant $t_0$, the setting operation indication signal $S_9$ is produced. This setting operation indication signal $S_9$ is extended by the time limit delay circuit 101 (Figure 3) after the second switch 5 is turned "off" at an instant $t_3$ (i.e., instant or transfer) until the setting operation is completed at an instant $t_4$. This setting operation indication signal $S_9$ serves to prevent erroneous setting, and the setting operation is made possible only during the period, during which the signal $S_9$ is present as the input to the address control circuit 6. The setting section 3 effects the setting of a setting value. The setting data is written in the first memory 1 when the first switch 4 is turned "on". The control involved at this time is as shown in Figure 6 at an instant $t_1$. More particularly, when the first switch 4 is turned "on", the write signal $S_1$ is produced and coupled to the address control circuit 6. As is apparent from Figure 5, when this write signal $S_1$ is supplied, the permit signal $S_2$ for permitting the output of the setting section 3, the first write signal $S_3$ for writing the setting data in the first memory 1 and the first address signal $S_4$ for specifying the address in which to write the setting data are produced.

The address value is set within the address control circuit 6. If this address value is "A", the setting data from the setting section 3 is written in the address "A" of the first memory 1. At an instant $t_2$ in Figure 6, the setting is made for a different element. At this time, the control is the same as the setting at the instant $t_0$ as described above except for that the address value of the first address signal $S_4$ is this time "B". At this time, the data for the old setting value is retained in the second memory 2, so that in the processing unit 7 the arithmetic processing can be continually made on the basis of the retained data. This means that even with a system, in which the setting value for a plurality of elements are related to one another so that unnecessary operations are caused when the setting for only one of the elements is changed, there is no need of stopping the system at the time of changing the setting, and this is very effective. When the operation of setting is ended, the second switch 5 is turned "off". When the second switch 5 is turned "off" at an instant $t_3$, a circuit (not shown) for producing the transfer signal $S_5$ for a constant period of time is immediately rendered operative, and the setting operation indication signal $S_9$ is extended by the time limit delay device 101 up to an instant $t_4$. Thus, when the transfer signal $S_5$ is supplied to the address control circuit 6 at the instant $t_3$, the memorized data in the first memory 1 is transferred to the second memory 2 during the period between the instants $t_3$ and $t_4$. More particularly, the address control circuit 6 supplies the first read signal $S_6$ and first address signal $S_4$ to the first memory 1 for successively reading out the memorized data from the first memory 1 and at the same time supplies the second write signal $S_7$ and second address signal $S_8$ to the second memory 2 for progressively writing the successively read-out data in the second memory 2. As the first and second address signals $S_4$ and $S_8$ at the time of the transfer may be used a regularly increasing or decreasing output of a counter or the like, and the case where the address values are progressively $A_0$, $A_1$, . . ., $A_n$ and $B_1$, $B_2$, . . ., $B_n$ are shown in (h) and (i) in Figure 6. In this way, the same setting value as the memorized data in the first memory 1 are transferred to the second memory 2 to complete the setting operation. At the instant $t_4$ the setting operation indication signal $S_9$ vanishes.

Meanwhile, the reading of the memorized data from the second memory 2 by the processing section 7 is effected as soon as the request signal $S_{21}$ and third address signal $S_{22}$ are supplied from the processing section 7 to the address control circuit 6 unless the data bus 8 is busy, i.e., except when the setting data from the setting section 3 is being written in the first memory 1 and when aforementioned transfer is being made. When the data bus 8 is being used, however, with the appearance of the request signal $S_{21}$ at the input of the address control circuit 6 the wait signal $S_{24}$ is supplied from the address control circuit 6 to the processing section $S_7$ to postpone the reading operation until the data bus 8 becomes available for use for the reading. In this way, the processing section 7 reads out the memorized data from the second memory 2 and effects calculations for the protective control.

Now, measures against the power stoppage will be described. Referring now to Figure 2, when the control power source is going to be lost, the non-volatile character control section or memory control signal generator 9 detects this and delivers the non-volatile character control signal $S_{10}$ to the first and second memories 1 and 2. In consequence, in the first and second memories 1 and 2 the data retained in the MOS flip-flop, i.e., the setting value, is written in the MNOS FETs, so that the setting value is preserved. When the control power source is recovered, the non-volatile character control section 9 again detects this, whereby the memorized data in the MNOS FETs is written again in the MOS flip-flop under control of the non-volatile character control signal $S_{10}$. In this way, the setting value before the loss of the control power source can be reproduced to permit resumption of the arithmetic processing in the processing section 7. This power stoppage measure is taken either when the power stoppage takes place during the setting operation or at another time.

While in the embodiment of Figure 2 described above the setting operation indication signal $S_9$ is used for preventing the erroneous setting, this signal $S_9$ may not be used in case where such a measure is unnecessary. Also, while the above description was concerned with the case of reading out the memorized data from the second memory 2, it will be apparent that it is possible to read out memorized data either from the first memory 1 or from both the first and second memories 1 and 2. That is, it is possible to permit the address control circuit 6 to produce the first read signal $S_6$ and first address signal $S_4$ in response to the request signal $S_{21}$ and third address signal $S_{22}$. Further, it is possible to permit data from the processing section 7 to be written as non-volatile data in the first or second memory 1 or 2.

Now, other embodiments of the invention will be described.

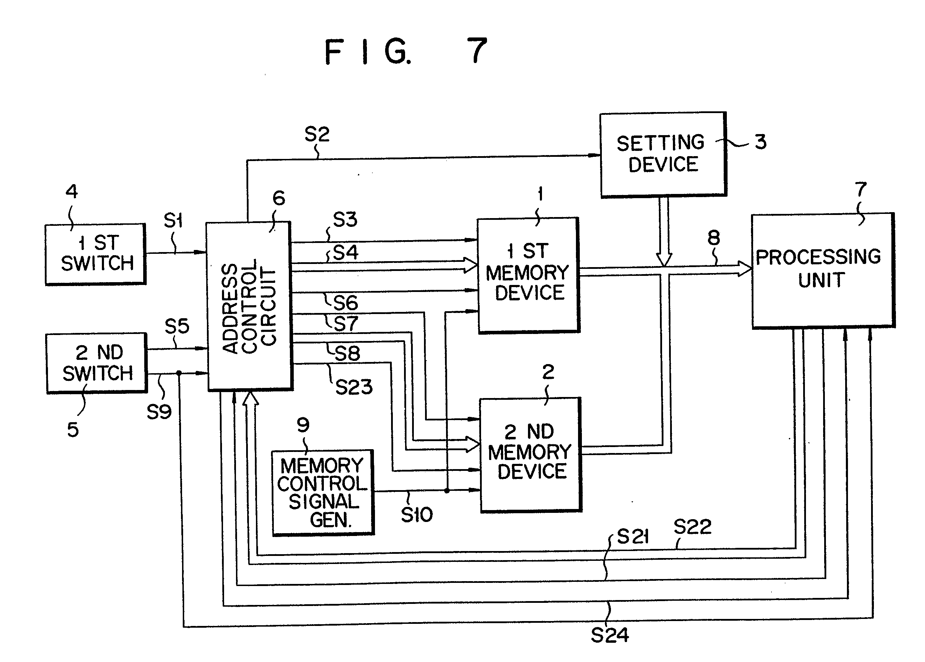

(1) Figure 7 shows a modification of the preceding embodiment of Figure 2. In Figure 7, like parts as in the preceding embodiment are designed like reference symbols, and only the difference from the preceding embodiment will be described here. While in the preceding embodiment of Figure 2 at least either memorized data in the first memory 1 or that in the second memory 2 is used in the arithmetic processing in the processing section, in the arrangement of Figure 7 the setting period indication signal $S_9$ is coupled not only to the address control circuit 6 but also to the processing section 7 for increasing the reliability thereof. The processing section 7 can thus read the state of the setting period indication signal $S_9$ and determine whether or not the setting operation is in force. Thus, during the setting period the arithmetic processing with the memorized data in either first or second memory 1 or 2 is carried out in the processing section 7, while at other times than the setting period the memorized data in the first and second memories 1 and 2 are checked up with each other so as to effect the arithmetic processing with the memorized data only when the two data coincide. In this way, the reliability of the setting section can be enhanced. In addition, in the event if the two data do not coincide, a defectiveness display or an alarm output may be produced. Thus, it is possible to permit prompt detection of the defectiveness of the system. Also, if necessary, the protective control output of protective control processing may be inhibited upon detection of a faulty setting value to prevent malfunction of the system that may otherwise result.

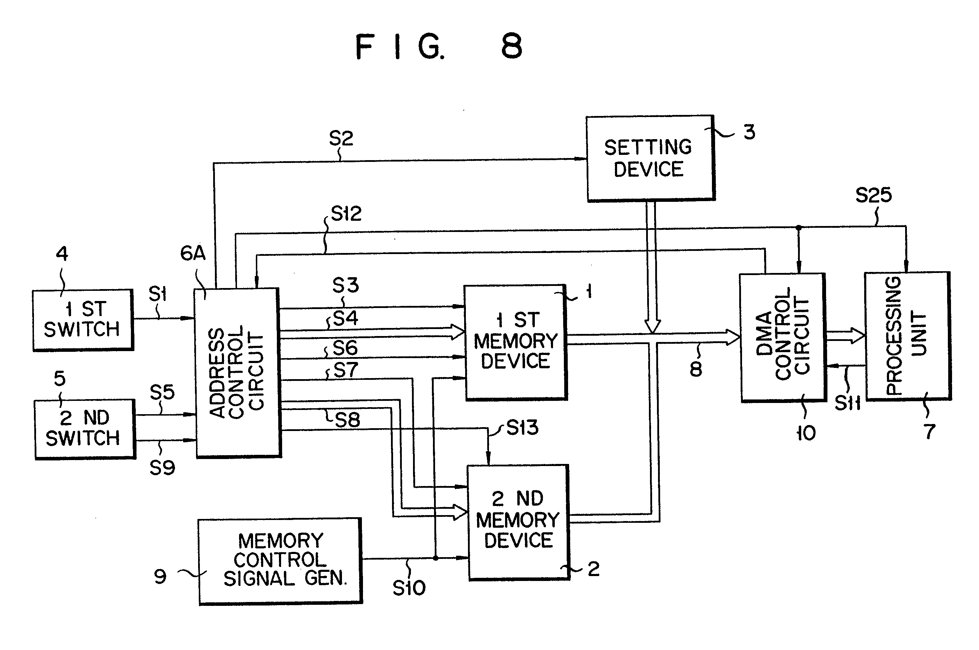

(2) Figure 8 shows another modification of the embodiment of Figure 2. In this arrangement, a direct memory access (DMA) function is incorporated. In Figure 8, like parts as in Figure 2 are designated with like reference symbols, and only the difference from the embodiment of Figure 2 will be described. While in the embodiment of Figure 2 the memorized data in the first and second memories 1 and 2 are directly read out, where the response speed of the first and second memories is very slow compared to the response speed of the processing section 7, a DMA control circuit 10, as shown in Figure 8, which permits the memorized data in the first and second memories 1 and 2 to be transferred to a data memory (not shown) in the processing section 7 during the out-of-operation period thereof, is provided for increasing the processing efficiency. For the DMA control, the DMA control circuit 10 supplies a DMA signal $S_{12}$, which has a duration longer than the period required for reading out all the memorized data in the first and second memories 1 and 2, to address control circuit 6A. With the DMA signal $S_{12}$ supplied when the setting operation is not in force, i.e., in the absence of the setting period indication signal $S_9$, the address control circuit 6A supplies a first DMA permit signal $S_{25}$ to the DMA control circuit 10 and processing section 7 and also produces the first and second read signals $S_6$ and $S_{13}$ and first and second address signals $S_4$ and $S_8$. During the setting operation the DMA is inhibited, so that even if the DMA signal $S_{12}$ is supplied to the address control circuit 6A at this time no signal concerning the DMA is produced from the address control circuit 6A. When the first DMA permit signal $S_{25}$ is supplied to the DMA control circuit 10, it progressively latches the memorized data coupled from the first and second memories 1 and 2 through the data bus 8. When the DMA is permitted with the first DMA permit signal $S_{25}$ supplied, the processing section 7 supplies a second DMA permit signal $S_{11}$ to the DMA control circuit 10. With the second DMA permit signal $S_{11}$ supplied, the DMA control circuit 10 produces the latched values.

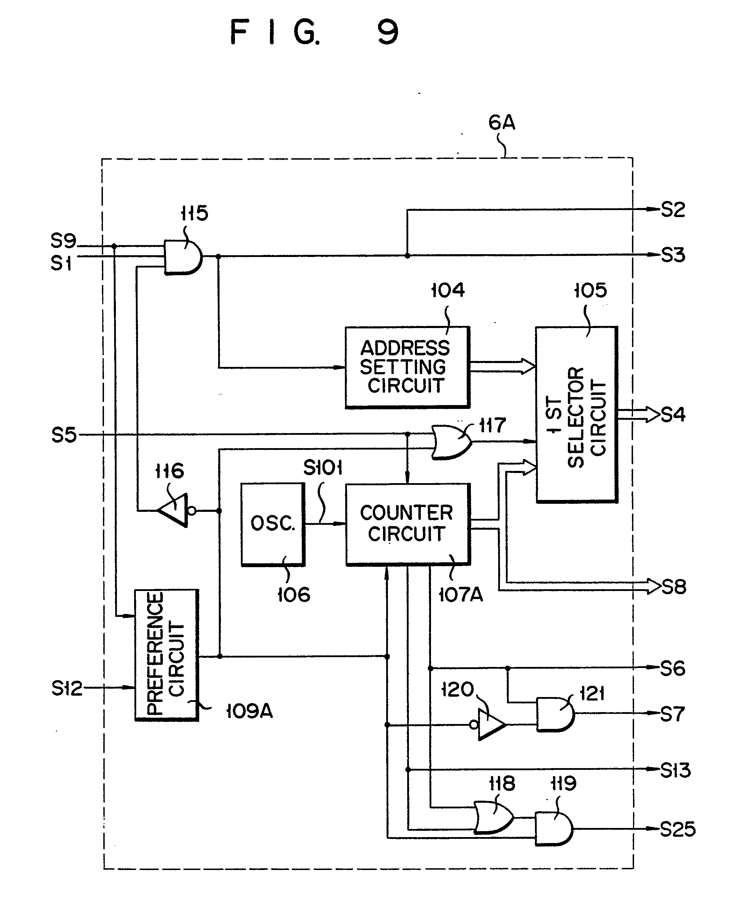

The details of the address control circuit 6A in the above arrangement of Figure 8 will now be described with reference to Figure 9. In Figure 9, like parts as those in Figure 5 are designated by like reference symbols, and their description is omitted.

In Figure 9, an AND circuit 115 receives and takes the logical "AND" of the setting period indication signal $S_9$ and write signal $S_1$ and the inversion output of a NOT circuit 116 receiving the output of a preference circuit 109A. The preference circuit 109A receives the setting period indication signal $S_9$ and DMA signal $S_{12}$ and postpones the control processing according to the signal received later until the processing according to the preceding signal is ended. When the DMA signal $S_{12}$ is the preceding signal, its output is "1" and, with the vanishment of the DMA signal $S_{12}$, is changed to "0". Since the duration of the DMA signal $S_{12}$ is short, even when the setting operation is postponed with preference given to the DMA, the write signal $S_1$ that is produced with the operation of the first switch 4 is not affected at all. Thus, the NOT circuit 116 provides the "1" output when the DMA processing is not in force and also after the DMA processing is ended. At this time the write signal is produced from the AND circuit 115. The output of the AND circuit 115 is coupled to the address setting circuit 104, and it is also coupled as the permit signal $S_2$ and first write signal $S_3$. The transfer signal $S_5$ is coupled to counter circuit 107A and is also coupled through an OR circuit 117 taking the OR of it and another input to the first selector circuit 105. The control by the transfer signal $S_5$ is the same as in the case of Figure 5 except for that the count value output of the counter circuit 107A is provided directly as the second address signal $S_8$ and that the second write signal $S_7$ is constituted by the output of an AND circuit 121, to which the first read signal $S_6$ and the inversion output of a NOT circuit 120 receiving the output of the preference circuit 109A are coupled. Thus, during the setting operation the output of the preference circuit 109A is "0", so that the output of the NOT circuit 120 is "1", and the same signal as the first read signal $S_6$ is provided as the second write signal $S_7$. A further difference is that the first read signal $S_6$ is coupled together with the second read signal $S_{13}$ to an OR circuit 118. The output of the OR circuit 118 is at this time "1", providing "1" as one input to an AND circuit 119, which however produces no output this time since the output of the preference circuit 109A is "0".

When the setting operation is not in force, with the DMA signal $S_{12}$ supplied the preference circuit 109A produces the "1" output. This output is coupled to the NOT circuit 116, OR circuit 117, counter circuit 107A, AND circuit 119 and NOT circuit 120. At this time, the output of the second NOT circuit 116 is "0", so that the AND circuit 115 which receives this output produces no output since its input AND condition is not satisfied even with the setting period indication signal $S_9$ supplied to it. The OR circuit 117, receiving "1" as its input, produces "1" output. Thus, the switching signal to the first selector circuit 105 becomes "1", whereby the same switching as at the time of the transfer as mentioned above is effected, and the output of the counter circuit 107A is provided as the first address signal $S_4$. With the "1" input to the counter circuit 107A, it produces a control signal for controlling the DMA. More particularly, it makes counting for the address output, as that made at the time of the transfer as mentioned earlier, twice in succession for successively reading out the memorized data in the first and second memories. Thus, successively varying address values are produced twice as the first and second address signals $S_4$ and $S_8$. However, at the time of the appearance of the first address output only the first read signal $S_6$ is produced to permit the reading from the first memory 1 only as at the time of the transfer. At this time, the output of the NOT circuit 120, receiving "1" as its input, is "0", and since this "0" output is coupled to the AND circuit 121, the second write signal $S_7$ is not produced. At the time of the appearance of the second address output, like the first read signal $S_6$, the clock signal $S_{101}$ is provided as the second read signal $S_{13}$, whereby reading from the second memory 2 is made. Meanwhile, the first and second read signals $S_6$ and $S_{13}$ are coupled to the OR circuit 118, so that at the time of the reading from the first and second memories 1 and 2 a signal similar to the read signal is produced from the OR circuit 118. This signal is coupled to the AND circuit 119 and is directly provided as the first DMA permit signal $S_{25}$ since the output of the preference circuit 109A, constituting the other input to the AND circuit 119, is "1".

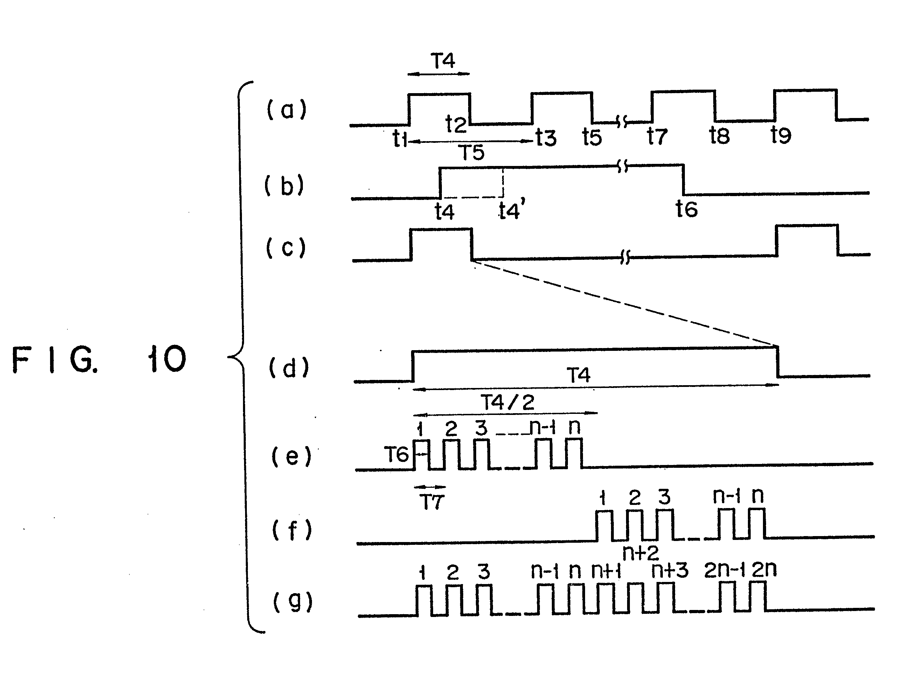

The operation of the circuit of Figure 8 described above will now be described with reference to the time chart of Figure 10. In Figure 10, signals concerning the DMA are shown, and the other signals involved are the same as those discussed in connection with Figure 6 and are thus omitted.

In Figure 10, labeled (a) is the DMA signal $S_{12}$, (b) the setting period indication signal $S_9$, (c) the output of the preference circuit 109A. Labeled (d) to (g) are signals involved in the control at the time of the DMA. More particularly, the signal (d) is the same as the output of the preference circuit 109A, (e) the first read signal $S_8$, (f) the second read signal $S_{13}$, and (g) the first read permit signal $S_{25}$. The DMA signal $S_{12}$ is a pulse signal having a pulse period $T_5$ and a pulse duration $T_4$, being "1" between instants $t_1$ and $t_2$ and "0" between instants $t_2$ and $t_3$. When the setting period indication signal $S_9$ is produced, for instance, at an instant $t_4$ between the instants $t_1$ and $t_2$, the preference circuit 109A provides the DMA signal $S_{12}$ as its output until the instant $t_2$. During the period between the instants $t_3$ and $t_5$, during which the DMA signal $S_{12}$ is provided, the output of the preference circuit 109A remains "0" since the setting period indication signal $S_9$ prevails. This state is continued until the setting period indication signal $S_9$ disappears at an instant $t_6$. If the instant $t_6$ is between instants $t_7$ and $t_8$, between which the DMA signal $S_{12}$ is "1", the output of the preference circuit 109A remains "0" at this instant, and it is "0" until the instant $t_9$ of the following rising of the DMA signal $S_{12}$. When the setting period indication signal $S_9$ is coupled between the instants $t_2$ and $t_3$, between which the DMA signal $S_{12}$ is "0", the preference circuit 109A provides the same output.

The control that is effected while the output of the preference circuit 109A is "1" will now be described. During a period from the instant $t_1$ and having one-half $T_4/2$ of the time width $T_4$ of the period, during which the DMA signal $S_{12}$ is "1", a first read signal $S_6$ is produced. This first read signal $S_6$ is a pulse train signal having a pulse period of $T_7$ and consisting of n pulses with a pulse duration of $T_6$. The number n is greater than the setting value memorized in the first memory 1. The second read signal $S_{13}$ is produced during the latter half of the period, during which the DMA signal $S_{12}$ is "1". This signal is again a pulse train signal having a pulse period of $T_7$ and consisting of n pulses with a pulse duration of $T_6$. As the first DMA permit signal $S_{25}$ the first and second read signals $S_6$ and $S_{13}$ are directly provided, that is, the signal $S_{25}$ is a pulse train signal having a pulse period of $T_7$ and consisting of 2n pulses with a pulse duration of $T_6$.

Through the DMA control the memorized data in the first and second memories 1 and 2 are successively transferred to the data memory in the processing section 7. Thus, as the setting value required for the arithmetic processing in the processing section 7 one in the data memory can be used, so that it is possible to increase the processing efficiency. The transfer of the setting value through the DMA function in this case is preferably periodically made from the standpoint of the reliability of the setting value which has an important role in the arithmetic processing.

(3) While in the previous embodiments of the invention a non-volatile character control section for detecting the loss and recovery of the control power source is used as a control method of the power stoppage measure for memory means using NVRAM (non-volatile random access memory), it is also possible to adopt other means for the power stoppage measure.

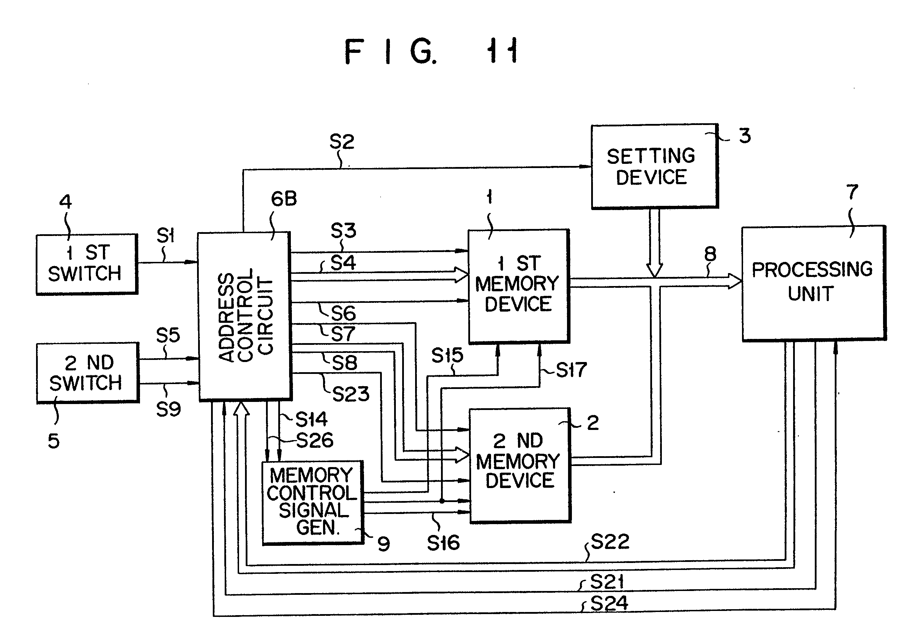

Figure 11 shows a further embodiment incorporating a different power stoppage measure. Referring to Figure 11, the non-volatile character control section 9 produces, when it receives a write end signal $S_{26}$ produced from address control circuit 6B as a result of coupling of the write signal $S_1$ thereto from the first switch 4, a first reserve signal $S_{15}$ coupled to the first memory 1. Also, when it receives a transfer end signal $S_{14}$ produced from the address control circuit 6B, it produces a second reserve signal $S_{16}$ coupled to the second memory 2. The first and second reserve signals $S_{15}$ and $S_{16}$ control the writing of data from the MOS flip-flops in the respective memories in the MNOS FETs therein. The non-volatile character control section 9 produces, upon detection of the instant of recovery of the control power supply, a reproduce signal $S_{17}$ coupled to the first and second memories 1 and 2 for reading out the data preserved in the MNOS FETs and writing again these data as reproduced data in the MOS flip-flops.

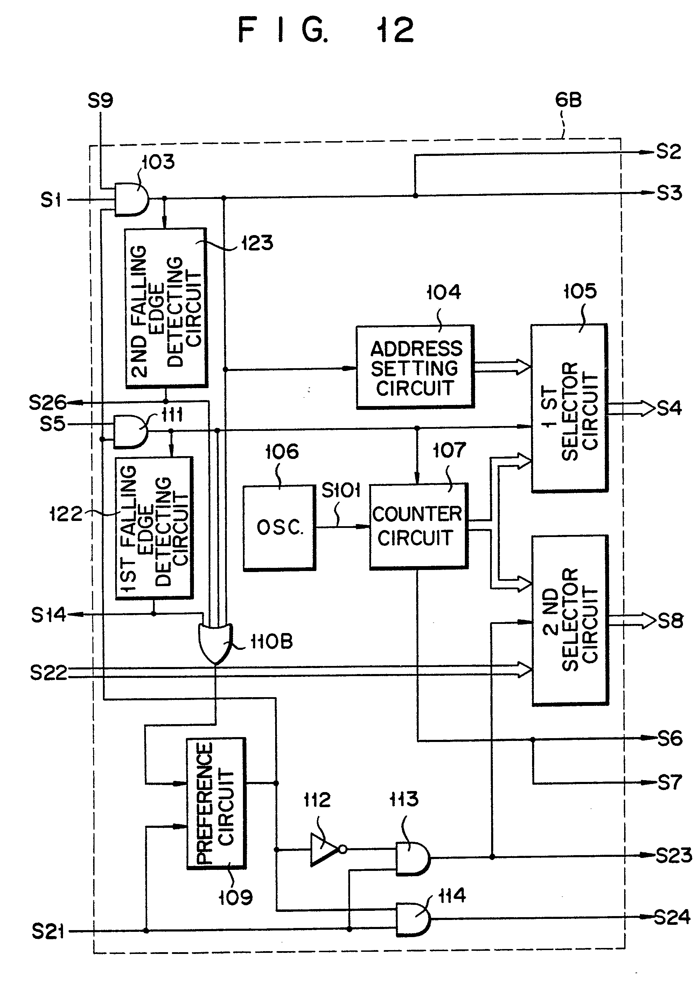

The details of the address control circuit 6B in the embodiment of Figure 11 will now be described with reference to Figure 12. Figure 12 shows a specific example of the address control circuit 6B. In Figure 12, like parts as those in Figure 5 are designated by like reference symbols, and their description is omitted. The circuit of Figure 12 is set apart from the circuit of Figure 5 in that first and second falling detection circuits 122 and 123 are additionally provided and that the transfer end signal $S_{14}$, which is the output of the first falling detection circuit 122, and the write end signal $S_{26}$, which is the output of the second falling detection circuit 123, are coupled to OR circuit 110B. The first falling detection circuit 122 receives the output of the AND circuit 111 and, by detecting the falling of the input, produces the transfer end signal $S_{14}$ which is a one-shot pulse. The duration $T_3$ of the one-shot pulse of the transfer end signal $S_{14}$ is longer than the period taken from the appearance of the second reserve signal $S_{16}$ till the completion of the afore-mentioned writing in the MNOS FETs. The transfer end signal $S_{14}$ is controlled such that during its presence the setting period indication signal $S_9$ is present. The second falling detection circuit 123 receives the output of the AND circuit 103 and, by detecting the falling of the input, produces the write end signal $S_{26}$ which is a one-shot pulse. The duration of this one-shot pulse is $T_3$ like the transfer end signal $S_{14}$.

The OR circuit 110B receives and provides the OR of the output of the AND circuit 103, output of the AND circuit 111, write end signal $S_{26}$ and transfer end signal $S_{14}$. Thus, while the first and second memories 1 and 2 are being controlled in the setting operation, the OR circuit 110B provides output coupled to the preference circuit 109.

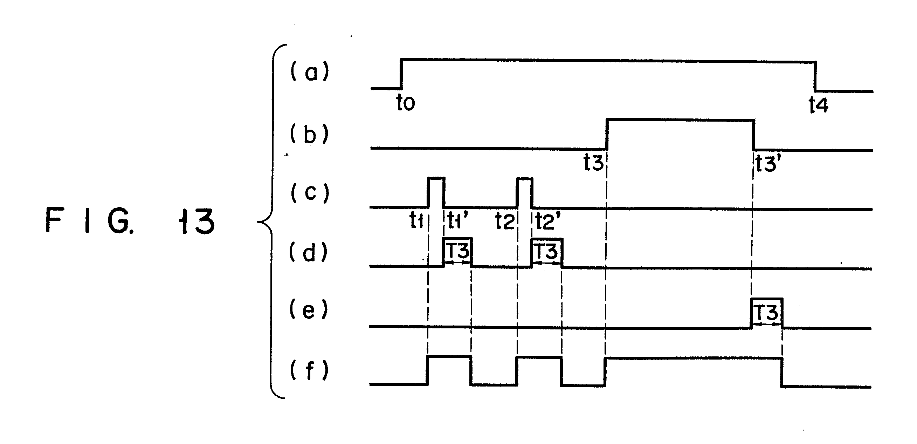

The operation of the address control circuit 6B of Figure 12 described above will now be described with reference to the time chart of Figure 13. In Figure 13, labeled (a) is the setting period indication signal $S_9$, (b) the transfer signal $S_5$, (c) the write signal $S_1$, (d) the write end signal $S_{26}$, (e) the transfer end signal $S_{14}$, and (f) the output of the OR circuit 110B. The other signals involved in the circuit of Figure 12 are the same as those discussed in connection with Figure 6. The write end signal $S_{26}$ is produced for a period $T_3$ from the instants $t_1'$ and $t_2'$ of the end of the write signal $S_1$. The transfer end signal $S_{14}$ is produced for the period $T_3$ from the instant $t_3'$ of the end of the transfer signal $S_5$. The output of the OR circuit 110B is produced for a period between instants $t_1$ and $t_1'$ plus the following period $T_3$, a period between instants $t_2$ and $t_2'$ plus the following period $T_3$ and a period between instants $t_3$ and $t_3'$ plus the following period $T_3$.

The other component elements in the system of Figure 11 are the same as those shown in Figure 1 by like reference symbols, so they are not described here.

The operation of the system of Figure 11 will now be described. The difference of the operation of the system of Figure 11 from that of the system of Figure 2 is only in the control of the first and second memories 1 and 2 by the non-volatile character control section or memory control signal generator 9, and only this difference is described here. While it has been described in connection with Figure 1 that the setting data from the setting section 3 is written in the first memory 1 under the control of the write signal $S_1$ produced from the first switch 4 with the depression thereof, when the write signal $S_1$ is coupled to the address control circuit 6B, the end of the writing operation is detected, and the write end signal $S_{26}$ is supplied to the non-volatile character control section 9. With the write end signal $S_{26}$ supplied, the non-volatile character control section 9 supplies the first reserve signal $S_{15}$ to the first memory 1. With the first write signal $S_3$ coupled to the first memory 1, the setting data from the setting section 3 is written in the MOS flip-flop in this memory. Also, with the first reserve signal $S_{15}$ supplied to the memory, the data from the MOS flip-flop is written in the MNOS FETs. Thus, by depressing the first switch 4 the setting data from the setting section 3 is preserved as non-volatile data in the first memory 2. The memorized data from the first memory 1 is transferred to the second memory 2 under the control of the transfer signal $S_5$ produced from the switch 5, and at the instant of the end of the transfer the transfer end signal $S_{14}$ is produced from the address control circuit 6 and coupled to the non-volatile character control section 9. With the transfer end signal $S_{14}$ supplied, the non-volatile character control section 9 supplies the second reserve signal $S_{16}$ to the second memory 2. The memorized data in the first memory 1 that is written in the MOS flip-flop in the second memory $S_{16}$, i.e., the new setting value, is written in the MNOS FETs under the control of the second reserve signal $S_{16}$. In this way, by turning "off" the second switch 5 the new setting value is not only transferred from the first memory 1 to the second memory 2, but also it is preserved as non-volatile data in the second memory 2. Thus, with the system of Figure 11 the memorized data in the first and second memories 1 and 2 are preserved as non-volatile data in a state in which the control power source is established, so that no control is needed at the time of the loss of the power source. At the time of the recovery of the control power source, the non-volatile character control section 9 detects this and supplies the reproduce signal $S_{17}$ to the first and second memories 1 and 2. This control is entirely the same as that effected by the non-volatile character control signal $S_{10}$ shown in Figure 1.

The method of controlling the first and second memories by the non-volatile character control section, as mentioned above in connection with Figure 11, may be applied to the construction of Figures 7 and 8 as well as to the construction of Figure 2.

Also, while in the above embodiments the first and second address signals produced from the address control circuit when transferring the memorized data from the first memory to the second have had different values, this is by no means limitative, that is, the first and second address signals may have the same value. Where the address signals have the same value, the control in the address control circuit can be simplified.

As has been described in the foregoing, with the setting device for a protective control system it is possible to readily set values for a number of elements with a small-sized device. Also, with the use of two non-volatile memories capable of both reading and writing the setting values can be preserved even at the time of the loss of the control power source without need of any particular power stoppage measure, and the arithmetic processing for the protective control can be resumed immediately after the recovery of the power source without need of resetting values. Further, it is possible to change setting values even during the operation of the system.

**Claims**

1. A setting apparatus for a protective control system comprising a digital setting value data generator (SU) and a digital processor (7) including a program memory (7-3), a data memory (7-2) and a processing unit (7-4) for carrying out predetermined protective operations by using a setting value data generated from the digital setting value data generator (SU) and stored in a non-volatile memory, characterized in that:

the digital setting value data generator (SU) comprises a setting device (3) for generating a digital setting value data, a first non-volatile memory (1) capable of both reading and writing for storing the digital setting value data, a second non-volatile memory (2) capable of both reading and writing for storing the digital setting value data read out from the first non-volatile memory (1), and means (6, 7) for reading out the data stored in the second memory (2) as a setting value data during a setting operation period wherein the contents of the first memory are renewed with a new setting value data generated from the setting device (3) and for reading out the data stored in the first or second memory (1, 2) as a setting value data during a non-setting period other than the setting operation period.

2. The setting apparatus according to claim 1, characterized in that, the data generated from the setting device (3) is transferred to the first memory by means of a first circuitry (4, 6) including a switch (4) for generating a write signal, and an address control circuit (6) is provided for supplying the write signal and an addressing signal to the first memory (1) so as to write into the first memory (1) the digital setting value data generated from the setting device (3).

3. The setting apparatus according to claim 2, characterized in that, the data stored in the first memory (1) is transferred to the second memory (2) by means of a second circuitry (5, 6) including a switch (5) for generating a transfer signal, and an address control circuit (6) is provided for supplying a read signal and an addressing signal to the first memory (1) and a write signal and an addressing signal to the second memory (2) so as to transfer the memory contents of the first memory (1) to the second memory (2).

4. The setting apparatus according to claim 1, characterized in that, the setting data stored in the first and second memories (1, 2) is written into the data memory (7-2) provided in the digital processor (7) under the control of a direct memory access means (10).

5. The setting apparatus according to claim 1, characterized by comprising, a means (5) for generating a setting operation indication signal (S9) representing the setting operation period wherein the contents of the first memory (1) are renewed, means for receiving the setting operation indication signal to judge whether the contents of the first memory are renewed, means for using the contents of the second memory (2) as a reference quantity while the contents of the first memory (1) are renewed, means for using the contents of the first or second memory as a reference quantity when a coincidence output is obtained at a comparator (7-4), which compares data stored in the first memory with data stored in the second memory, and means (7-5) for executing at least one of operations of error display, alarm output, prevention from outputting the protection control output, and prevention from protection control processing.

**Patentansprüche**

1. Einstellvorrichtung für ein Schutzsteuersystem, mit einem digitalen Einstellwertdatengenerator (SU) und einem Digitalprozessor (7), der einen Programmspeicher (7-3), einen Datenspeicher (7-2) und eine Verarbeitungseinheit (7-4) aufweist, um unter Verwendung eines von dem digitalen Einstellwertdatengenerator (SU) erzeugten und in einem nichtflüchtigen Speicher gespeicherten Einstellwertdatums vorbestimmte Schutzmaßnahmen durchzuführen, dadurch gekennzeichnet, daß der digitale Einstellwertdatengenerator (SU) eine Einstelleinrichtung (3) aufweist zum Erzeugen eines digitalen Einstellwertdatums, einen ersten nicht-flüchtigen Schreib-/Lesespeicher (1) aufweist zum Speichern des digitalen Einstellwertdatums, einen zweiten nichtflüchtigen Schreib-/Lesespeicher (2) aufweist zum Speichern des aus dem ersten nicht-flüchtigen Speicher (1) ausgelesenen Einstellwertdatums, und eine Einrichtung (6, 7) aufweist zum Auslesen des in dem zweiten Speicher (2) gespeicherten Datums als ein Einstellwertdatum während des Zeitraums, in welchem ein Einstellvorgang stattfindet, bei dem der Inhalt des ersten Speichers durch ein neues, von der Einstelleinrichtung (3) erzeugtes Einstellwertdatum erneuert wird, und zum Auslesen des in dem ersten oder in dem zweiten Speicher (1, 2) gespeicherten Datums als Einstellwertdatum während eines Zeitraums, in welchem kein Einstellvorgang stattfindet und der von dem Zeitraum verschieden ist, in dem ein Einstellvorgang erfolgt.

2. Einstellvorrichtung nach Anspruch 1, dadurch gekennzeichnet, daß das von der Einstelleinrichtung (3) erzeugte Datum zu dem ersten Speicher mittels eines ersten Schaltkreises (4, 6) übertragen wird, der einen Schalter (4) zum Erzeugen eines Schreibsignals aufweist, und daß eine Adreßsteuerschaltung (6) vorgesehen ist, um das Schreibsignal und ein Adreßsignal an den ersten Speicher (1) zu legen, so daß das von der Einstelleinrichtung (3) erzeugte digitale Einstellwertdatum in den ersten Speicher (1) eingeschrieben wird.

3. Einstellvorrichtung nach Anspruch 2, dadurch gekennzeichnet, daß das in dem ersten Speicher (1) gespeicherte Datum mittels eines einen Schalter (5) zum Erzeugen eines Übertragungssignals aufweisenden zweiten Schaltkreises (5, 6) zu dem zweiten Speicher (2) übertragen wird, und daß eine Adreßsteuerschaltung (6) vorgesehen ist, um ein Lesesignal und ein Adreßsignal an den ersten Speicher (1) und ein Schreibsignal und ein Adreßsignal an den zweiten Speicher (2) zu legen, so daß der Speicherinhalt des ersten Speichers (1) zu dem zweiten Speicher (2) übertragen wird.

4. Einstellvorrichtung nach Anspruch 1, dadurch gekennzeichnet, daß das in dem ersten und dem zweiten Speicher (1, 2) gespeicherte Einstelldatum unter Steuerung einer Speicher-Direktzugriffseinrichtung (10) in den in dem Digitalprozessor (7) vorgesehenen Datenspeicher (7-2) eingeschrieben wird.

5. Einstellvorrichtung nach Anspruch 1, gekennzeichnet durch eine Einrichtung (5) zum Erzeugen eines Einstellvorgang-Anzeigesignals (S9), welches den Zeitraum des Einstellvorgangs angibt, in welchem der Inhalt des ersten Speichers (1) erneuert wird, eine Einrichtung zum Empfangen des Einstellvorgang-Anzeigesignals, um zu beurteilen, ob der Inhalt des ersten Speichers erneuert wird, eine Einrichtung, die den Inhalt des zweiten Speichers (2) als Bezugsgröße verwendet, während der Inhalt des ersten Speichers (1) erneuert wird, eine Einrichtung, die den Inhalt des ersten oder des zweiten Speichers als eine Bezugsgröße verwendet, wenn an einem das in dem ersten Speicher gespeicherte Datum mit dem in dem zweiten Speicher gespeicherten Datum vergleichenden Komparator (7-4) ein Überinstimmungs-Ausgangssignal erhalten wird, und eine Einrichtung (7-5) zum Ausführen mindestens einer der Operationen Fehleranzeige, Alarmgabe, Sperren der Abgabe des Schutzsteuerausgangssignals und Sperren der Schutzsteuerverarbeitung.

**Revendications**

1. Un appareil de réglage pour un système de commande de protection comportant un générateur (SU) de données de valeurs de réglage numériques et un processeur numérique (7) comportant une mémoire de programme (7-3), une mémoire de données (7-2) et une unité de traitement (7-4) pour la realisation d'opérations de protection prédéterminées en utilisant une donnée de valeur de réglage produite par le générateur (SU) de données de valeurs de réglage numériques et mémorisée dans une mémoire rémanente, caractérisée en ce que:

le générateur (SU) de données de valeurs de réglage numériques comporte un dispositif de réglage (3) destiné à fournir une donnée de valeur de réglage numérique, une première mémoire rémanente (1), permettant à la fois la lecture et l'écriture, pour mémoriser la donnée de valeur de réglage numérique, une seconde mémoire rémanente (2), permettant à la fois l'écriture et la lecture, pour mémoriser la donnée de valeur de réglage numérique lue à partir de la première mémoire rémanente (1), et des moyens (6, 7) pour lire la donnée mémorisée dans la seconde mémoire (2) en tant que donnée de valeur de réglage durant une période d'opération de réglage dans laquelle le contenu de la première mémoire est remplacé par une nouvelle donnée de valeur de réglage produite par le dispositif de réglage (3), et pour lire la donnée mémorisée dans la première ou la seconde mémoire (1, 2) en tant que donnée de valeur de réglage durant une période de non réglage autre que la période d'opération de réglage.

2. L'appareil de réglage suivant la revendication 1, caractérisé en ce que la donnée produite par le dispositif de réglage (3) est transférée vers la première mémoire au moyen d'un premier circuit (4, 6) qui comprend un commutateur (4) pour produire un signal d'écriture, et qu'un circuit de commande d'adresse (6) est prévu pour fournir le signal d'écriture et un signal d'adressage à la première mémoire (1) de manière à inscrire dans la première mémoire (1) la donnée de valeur de réglage numérique produite par le dispositif de réglage (3).

3. L'appareil de réglage suivant la revendication 2, caractérisé en ce que la donnée mémorisée dans la première mémoire (1) est transférée vers la seconde mémoire (2) au moyen d'un second circuit (5, 6) comprenant un commutateur (5) pour produire un signal de transfert, et qu'un circuit de commande d'adresse (6) est prévu pour fournir un signal de lecture et un signal d'adressage à la première mémoire (1), et un signal d'écriture et un signal d'adressage à la seconde mémoire (2) de manière à transférer le contenu de la mémoire, de la première mémoire (1) vers la seconde mémoire (2).

4. L'appareil de réglage suivant la revendication 1, caractérisé en ce que la donnée de réglage mémorisée dans les première et seconde mémoires (1, 2) est inscrite dans la mémoire de données (7-2) prévue dans le processeur numérique (7), sous la commande d'un moyen d'accès direct (10) à la mémoire.

5. L'appareil de réglage suivant la revendication 1, caractérisé par le fait qu'il comporte un moyen (5) pour produire un signal (S9) d'indication d'opération de réglage qui représente la période d'opération de réglage pendant laquelle le contenu de la première mémoire (1) est renouvelé, des moyens pour recevoir le signal d'indication d'opération de réglage pour juger si le contenu de la première mémoire est renouvellé, des moyens pour utiliser le contenu de la seconde mémoire (2) comme quantité de référence lorsque le contenu de la première mémoire (1) est renouvelé, des moyens pour utiliser le contenu de la première ou de la seconde mémoire comme quantité de référence lorsqu'il apparaît une sortie de coïncidence au niveau d'un comparateur (7-4) qui compare des données mémorisées dans la première mémoire à des données mémorisées dans la seconde mémoire et des moyens (7-5) pour réaliser au moins une des opérations comprenant un affichage d'erreur, une sortie d'alarme, un empêchement de la délivrance de la sortie de commande de protection, et un empêchement du traitement de commande de protection.

# F I G. 1

0 021 288

# F I G. 2

0021 288

# F I G. 3

# F I G. 4

# F I G. 5

# F I G. 6

(a)

t0                                                                    t4

(b)

t3

(c)

t1        t2

(d)

(e)

(f)

(g)

(h)        A        B     A₀   A          Aₙ

(i)                        B₀   B          Bₙ

# F I G. 7

F I G. 8

**0 0 21 288**

# F I G.  9

6A

S9
S1
115

S2
S3

104
105

ADDRESS
SETTING
CIRCUIT

1 ST
SELECTOR
CIRCUIT

S4

S5
117

116
S101

OSC.
106

COUNTER
CIRCUIT
107A

S8

PREFERENCE
CIRCUIT

S12
109A

S6

120
121
S7

S13

118
119
S25

8

F I G. 10

0021 288

F I G. 11

# F I G. 12

11

F I G. 13

0021 288